(19) Europäisches Patentamt

European Patent Office

Office européen des brevets

(11) **EP 1 022 673 A1**

(12) **DEMANDE DE BREVET EUROPEEN**

(43) Date de publication:
26.07.2000 Bulletin 2000/30

(51) Int. Cl.⁷: **G06K 7/10**

(21) Numéro de dépôt: 00390001.6

(22) Date de dépôt: 19.01.2000

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **22.01.1999 FR 9900717**

(71) Demandeur:
**INTERMEC SCANNER TECHNOLOGY CENTER**
**31676 Labège Cédex (FR)**

(72) Inventeurs:
• **El Akel, Khalid**
  **31320 Castanet (FR)**

• **Dumontier, Christophe**
  **31320 Castanet (FR)**
• **Reuze, Patrick**
  **31500 Toulouse (FR)**
• **Thuries, Serge**
  **31240 Saint Jean (FR)**
• **Puech, Jean-Michel**
  **31400 Toulouse (FR)**
• **Massieu, Jean-Louis**
  **82000 Montauban (FR)**

(74) Mandataire:
**Cabinet BARRE LAFORGUE & associés**
**95, rue des Amidonniers**
**31000 Toulouse (FR)**

(54) **Dispositif optoélectronique d'acquisition d'images de codes à une et deux dimensions**

(57) L'invention concerne un dispositif optoélectronique d'acquisition de codes à une et deux dimensions comprenant un capteur électronique (7) constitué d'une matrice photosensible haute résolution, des moyens (10, 11) de conversion analogique/numérique des données issues du capteur électronique (7), et des moyens d'acquisition et de traitement des images comportant un module de pré-traitement (1) et deux modules de traitement (2, 3) formant une architecture de type pipe-line. De plus, le module de pré-traitement (1), réalisé au moyen d'opérateurs câblés, fonctionne en mode synchrone sur le flux de données numériques et implémente des opérations simples de traitement d'images. Les modules de traitement (2, 3) sont quant à eux constitués de modules programmables fonctionnant en mode asynchrone sur les données issues du module précédent et stockées de façon alternative dans deux blocs mémoires (21-22, 25, 26), lesdits modules étant programmés pour effectuer des opérations de traitement aboutissant à l'obtention de données normalisées représentatives des informations "codées" dans le code saisi.

Fig 1

EP 1 022 673 A1

Printed by Xerox (UK) Business Services
2.16.7 (HRS)/3.6

**Description**

L'invention concerne un dispositif optoélectronique d'acquisition d'images de codes à une et deux dimensions.

L'apparition de nombreux types de codes à deux dimensions est effective depuis quelques années. Ce nouveau type de codes a pour principal avantage, par rapport aux codes barres traditionnels (1D ou 1D empilés), de renfermer, pour une même surface utile, une densité d'informations enregistrées beaucoup plus importante.

L'apparition de cette nouvelle génération de codes a bien entendu conduit à la réalisation de nouveaux types de dispositifs optoélectroniques, ou lecteurs, capables de traiter les codes à deux dimensions tout en gardant la possibilité de traiter les codes barres classiques.

De tels lecteurs comprennent, en premier lieu, de façon classique, un capteur électronique d'acquisition d'images de tailles variables (de technologie CCD ou autre), des moyens d'éclairage adaptés pour éclairer les codes et permettre l'acquisition des images sur le capteur électronique, et des moyens de traitement des images adaptés pour piloter le capteur électronique et les moyens d'éclairage, et pour assurer le décodage des images formées sur ledit capteur électronique.

De plus, les moyens d'acquisition et de traitement des images des lecteurs actuels se composent principalement:

- d'un module de conversion permettant de numériser les images issues du capteur électronique, c'est-à-dire de coder cette image sur un certain nombre de niveaux de gris, généralement 256, et de fournir un flux constant de données numérisées à la fréquence pixel,
- d'un module mémoire permettant le stockage des données numérisées et comportant un ou plusieurs plans images,
- et d'un module de traitement effectuant l'ensemble des opérations nécessaires à la lecture et au décodage du code à deux dimensions.

Sur la base d'une telle architecture, les dispositifs optoélectroniques portables actuels travaillent sur des matrices d'une taille maximale d'environ 800 x 600 pixels avec une cadence de l'ordre de trois images par seconde. Toutefois, du fait des progrès constants de l'industrie microélectronique qui offrent des possibilités et des puissances de calcul de plus en plus importantes, de nouveaux dispositifs possédant des performances accrues, en terme de cadence calcul, sont en cours d'élaboration. Un gain de quelques unités (un facteur de 5) est ainsi annoncé.

Il convient toutefois de noter que cette possibilité d'augmentation des performances en terme de cadence de calcul, s'avère dans la pratique limitée du fait de l'architecture ci-dessus décrite des moyens d'acquisition et de traitement des images, en raison du temps nécessaire au module de traitement pour effectuer, entre deux acquisitions, les opérations de lecture et de décodage de chaque code saisi.

Par ailleurs, il n'existe par contre aucune solution rationnelle à l'heure actuelle, permettant d'augmenter de façon notable la taille des images traitées. Cette augmentation de la taille des images traitées s'avère, en effet, beaucoup plus problématique car la puissance de calcul nécessaire au traitement évolue comme le carré du facteur d'agrandissement de l'image originale: le doublement de la taille de l'image implique donc un quadruplement de la puissance de calcul.

Or, pour l'architecture décrite ci-dessus des dispositifs optoélectroniques actuels, toute augmentation de la puissance de calcul se traduit par une augmentation notable de la taille mémoire nécessaire, et donc par une augmentation notable d'une part des besoins en terme de consommation électrique, et d'autre part, du volume nécessaire pour l'implantation des blocs mémoires. Dans la pratique, de telles contraintes d'ordre physique et de consommation expliquent, notamment concernant les dispositifs optoélectroniques portables, la limitation de la taille des matrices aux valeurs ci-dessus énoncées, c'est-à-dire 800 x 600 pixels.

Il s'avère toutefois que les codes à deux dimensions tendent à "coder" de plus en plus d'informations mais sur des surfaces de plus en plus réduites, de sorte que l'accroissement de la taille maximale des matrices apparaît comme absolument nécessaire.

La présente invention vise à solutionner ce problème et a donc pour principal objectif de fournir un dispositif optoélectronique, notamment portable, apte à travailler sur des images de tailles importantes, notamment d'une taille de l'ordre de quatre fois supérieure à celle des images actuelles.

Un autre objectif de l'invention est de fournir un dispositif optoélectronique possédant des performances accrues en terme de cadence de calcul par rapport à celles des dispositifs actuels les plus performants.

A cet effet, l'invention vise un dispositif optoélectronique d'acquisition d'images de codes à une et deux dimensions comprenant un capteur électronique, des moyens optiques permettant de former des images sur ledit capteur électronique, des moyens d'éclairage adaptés pour éclairer les codes et permettre l'acquisition des images sur le capteur électronique, et des moyens d'acquisition et de traitement des images adaptés pour piloter le capteur électronique et les moyens d'éclairage et pour assurer le décodage des images formées sur le capteur.

Selon l'invention, ce dispositif optoélectronique se caractérise en ce que:

- le capteur électronique est constitué d'une matrice photosensible haute résolution de taille T = n x n pixels adaptée pour délivrer avec une fréquence pixel f un flot de données représentatives des images formées sur ledit capteur électronique,
- les moyens d'acquisition et de traitement des images comprennent:

  - des moyens de conversion analogique/numérique des données issues de la matrice photosensible, adaptés pour numériser lesdites données et délivrer un flot de données numériques codées sur un nombre prédéterminé de niveau de gris,
  - un module de pré-traitement réalisé au moyen d'opérateurs câblés et adapté pour assurer un traitement bas niveau du flot de données numériques et pour fournir, d'une part, une représentation binarisée des images formées sur le capteur électronique et, d'autre part, des données primitives caractéristiques des codes saisis, ledit module de pré-traitement comportant un registre tampon de mémorisation temporaire des images binarisées et des données primitives,
  - un premier module programmable de traitement comprenant:

    - deux blocs mémoires,
    - un circuit logique de gestion des blocs mémoires adapté pour configurer de façon alternative un des blocs mémoires dans un mode d'écriture des données issues du registre tampon et l'autre bloc mémoire dans un mode de lecture des données mémorisées dans ce dernier,
    - et une unité programmable, de type processeur, programmée, à partir des données mémorisées dans le bloc mémoire configuré en mode de lecture, pour tester la présence ou non d'un code valide, localiser chaque code valide, identifier chaque type de code, fixer éventuellement la priorité du code à traiter, mettre en forme et normaliser chaque code valide,

  - et un second module programmable de traitement comprenant:

    - deux blocs mémoires,
    - un circuit logique de gestion des blocs mémoires adapté pour configurer de façon alternative un des blocs mémoires dans un mode d'écriture des données issues du premier module programmable, et l'autre bloc mémoire dans un mode de lecture des données mémorisées dans ce dernier,
    - et une unité programmable de type processeur, programmée, à partir des données mémorisées dans le bloc mémoire configuré en mode de lecture, pour décoder lesdites données de façon à délivrer des données normalisées représentatives de chaque code saisi.

L'architecture des moyens d'acquisition et de traitement des images du dispositif optoélectronique selon l'invention est en premier lieu composé de trois modules, un module de pré-traitement et deux modules de traitement, formant une architecture de type pipeline : chaque module utilise uniquement les données fournies par le module précédent et ne fournit des données qu'au module suivant. De plus, ces trois modules distincts peuvent se regrouper en deux types :

- un module de pré-traitement réalisé au moyen d'opérateurs câblés, fonctionnant en mode synchrone à la fréquence pixel sur le flux des données issues de la numérisation, et implémentant des opérations simples de traitement d'images permettant d'obtenir, en sortie dudit module, une quantité d'informations suffisantes pour l'obtention du décodage ultérieur des images mais toutefois nettement inférieures à la quantité d'informations que nécessiterait le stockage de l'image initiale,
- des modules programmables fonctionnant en mode asynchrone sur les données issues du module précédent et stockées de façon alternative dans deux mémoires, et réalisant des opérations de traitement plus complexes aboutissant à l'obtention de données normalisées représentatives des informations "codées" dans les codes saisis.

Une telle architecture hybride conjuguant une architecture de type pipe-line avec des traitements de données effectués soit en mode synchrone (module de pré-traitement), soit en mode asynchrone (modules programmables) conduit à rendre actif à tout instant les différents opérateurs desdits modules et permet de réaliser un traitement en temps réel des images.

Dans la pratique, une telle architecture permet ainsi de traiter par exemple des images de taille 1500 x 1500 pixels à une cadence de 30 images par seconde. De plus, la taille requise des blocs mémoires des moyens d'acquisition et de traitement est relativement modeste de sorte que ces derniers peuvent équiper un dispositif optoélectronique portable.

Selon une autre caractéristique de l'invention, la matrice photosensible comporte plusieurs sorties en parallèle, et les moyens de conversion analogique/numérique sont adaptés pour numériser en parallèle les données délivrées au niveau de chaque sortie de la matrice photosensible, et comprennent un multiplexeur adapté pour délivrer en série les données numériques.

Compte tenu du flot important des données issues du capteur électronique, cette disposition permet d'éviter d'éventuels problèmes "d'étranglement" au niveau de la conversion analogique/numérique desdites données.

Selon une autre caractéristique de l'invention, le module de pré-traitement comprend:

- un bloc mémoire de lignes adapté pour mémoriser les données numériques sous la forme d'une fenêtre glissante de (x) lignes consécutives comportant chacune n pixels,
- un circuit de binarisation adapté pour coder les données numériques sous forme binaire en fonction d'un seuil évolutif calculé, pour chaque donnée traitée, en prenant en compte le voisinage des (x, x) données entourant ladite donnée.

De plus, le module de pré-traitement comporte préférentiellement un circuit de détection adapté pour identifier, à partir des données binaires issues du circuit de binarisation, des signatures spécifiques de codes à deux dimensions tels que notamment les codes MAXICOME, AZTEC, QR, Code ONE.

Selon une autre caractéristique de l'invention, le module de pré-traitement comprend, en aval du bloc mémoire de lignes, deux sous-modules de pré-traitement disposés en parallèle entre ledit bloc mémoire et le registre tampon :

- un premier sous-module de traitement comportant le circuit de binarisation et le circuit de détection de signatures, et adapté pour délivrer vers le registre tampon une image binaire, et les coordonnées cartésiennes des signatures spécifiques des codes,
- un second sous-module de traitement comportant successivement :

  • un circuit de sous-échantillonnage apte à réduire la taille T de l'image formée sur la matrice photosensible, et adapté pour délivrer ladite image réduite vers le registre tampon,
  • un circuit de détection des contours dans l'image réduite issue du circuit de sous-échantillonnage, adapté pour délivrer vers le registre tampon des images desdits contours codés sur un bit,
  • et un circuit de détection des segments de droites dans l'image réduite adapté pour délivrer vers le registre tampon les coordonnées de fin et de début et l'orientation desdits segments de droite.

Par ailleurs, chaque bloc mémoire du premier module programmable comprend avantageusement trois blocs dans lesquels sont respectivement mémorisées :

• l'image binaire,

- l'image réduite et l'image des contours,
- les données relatives aux segments de droite et aux signatures spécifiques des codes.

D'autres caractéristiques, buts et avantages de l'invention ressortiront de la description détaillée qui suit en référence aux dessins annexés qui en représentent à titre d'exemple non limitatif un mode de réalisation préférentiel. Sur ces dessins qui font partie intégrante de la présente description:

- la figure 1 est un schéma fonctionnel d'un dispositif optoélectronique conforme à l'invention,
- la figure 2 est un schéma fonctionnel détaillé des moyens de conversion des données issues du capteur électronique,
- la figure 3 est un schéma représentant les configurations successives des blocs mémoires du dispositif optoélectronique selon l'invention,
- et la figure 4 est un schéma représentant les étapes de traitement d'images successives.

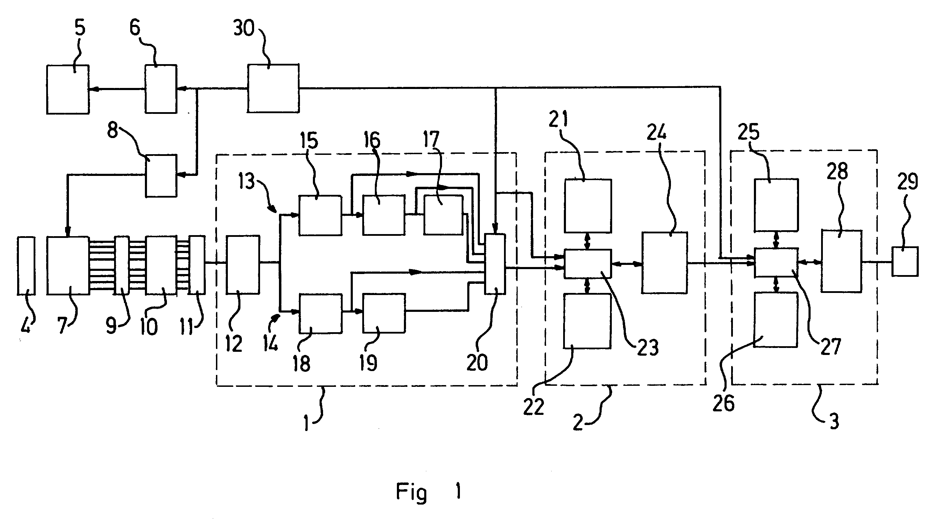

Le dispositif optoélectronique représenté à la figure 1 est adapté pour assurer le traitement d'images de codes à 1 ou 2 dimensions, présentant une taille de 1500 x 1500 pixels à une cadence de 30 images par seconde.

A cet effet, l'architecture des moyens d'acquisition et de traitement des images de ce dispositif optoélectronique est une architecture de type pipeline composée de modules distincts d'une part utilisant uniquement les données fournies par le module précédent, et d'autre part fournissant des données uniquement au module suivant. Selon l'invention, en outre, ces modules sont de deux types :

- des modules "hardware" fonctionnant en mode synchrone sur le flux de données représentatives des images. Ces modules implémentent des opérations simples de traitement des images et sont mis en oeuvre au travers d'opérateurs câblés et regroupés dans un module 1 de pré-traitement,
- des modules "software" fonctionnant en mode asynchrone sur des données stockées en mémoire, représentés par les blocs fonctionnels 2 et 3 sur la figure 1. Les opérations réalisées par ces modules sont plus complexes et font appel à des opérations programmables de type processeur.

Tel que représenté à la figure 1, ce dispositif optoélectronique comprend en premier lieu :

- des moyens optiques 4 de formation des images sur un capteur électronique,
- des moyens d'éclairage 5 aptes à délivrer un faisceau incident d'éclairage, et commandés par une unité de pilotage 6.

Les moyens optiques 4 et d'éclairage 5 peuvent être de tout type connu en soi, ou tels que décrits dans la demande de brevet français déposée ce jour conjointement à la présente demande par la demanderesse.

Le capteur électronique 7 est quant à lui constitué d'une matrice photosensible "APS" 1500 x 1500 pixels dotée de huit sorties parallèles, et adaptée pour délivrer des données au niveau de chaque sortie avec une fréquence pixel de 14 MHz. Ce capteur électronique 7 est en outre commandé par une unité de pilotage 8.

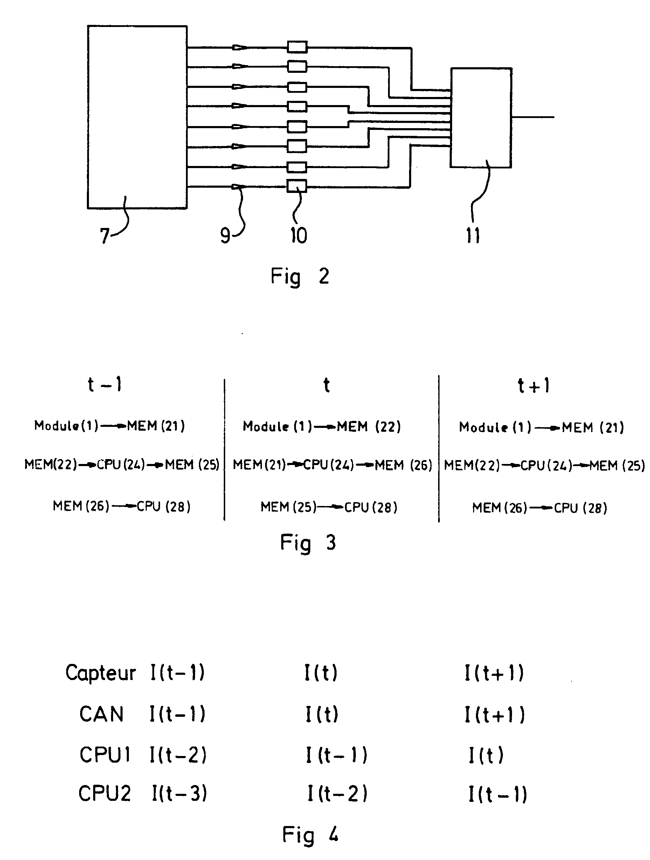

Le dispositif optoélectronique comprend également des moyens de conversion des données délivrées au niveau des huit sorties du capteur électronique 7. Tel que représenté à la figure 2, ces moyens de conversion comprennent:

- pour chaque sortie du capteur électronique, un amplificateur tel que 9, et un convertisseur analogique/numérique tel que 10 adapté pour délivrer un signal numérique codé sur huit bits (256 niveaux de gris),
- un multiplexeur 11 adapté pour délivrer sur une seule voie un flux de données codées sur huit bits vers le module de pré-traitement 1.

Ce module de pré-traitement 1 comprend, en premier lieu, tel que représenté à la figure 1, un bloc mémoire de lignes 12 dans lequel sont stockées des fenêtres glissantes de cinq lignes consécutives de 1500 pixels chacune.

Ce module de pré-traitement 1 comprend également deux sous-modules de pré-traitement 13, 14 disposés en parallèle de façon à fonctionner, chacun, de manière synchrone sur le flux de données issues du bloc mémoire 12 avec une fréquence de travail fixée par la fréquence pixel.

Le premier de ces sous-modules de pré-traitement 13 comprend, en premier lieu, une unité de sous-échantillonnage 15 dans laquelle la taille T de l'image initiale est divisée selon la méthode pyramidale de BURT de façon à obtenir une image de taille réduite T/4 puis T/16.

Ce sous-module de pré-traitement 13 comprend, ensuite, une unité 16 de détection des contours travaillant sur l'image réduite de taille T/16 issue de l'unité de sous-échantillonnage 15.

Ce sous-module de pré-traitement 13 comprend, enfin, une unité 17 de détection des segments de droite travaillant sur l'image réduite de taille T/16 issue de l'unité de sous-échantillonnage 15, et permettant de fournir les coordonnées des points début et fin des différents segments de droite présents dans ladite image réduite, ainsi qu'un histogramme des orientations de ces lignes. Le procédé de traitement de l'image réduite permettant d'obtenir ces diverses données est décrit de façon détaillée dans la demande de brevet relative à un procédé et à un dispositif de détection de segments de droites, déposée conjointement à la présente demande au nom de la demanderesse.

Le second sous-module de pré-traitement 14 comprend, en premier lieu, une unité 18 de binarisation de l'image initiale apte à transformer les pixels codés sur 256 niveaux de gris en pixels codés sur deux niveaux, en utilisant un seuil évolutif fonction du voisinage du pixel traité (matrice 5 x 5 entourant ce pixel).

Ce sous-module de pré-traitement comprend 14, en outre, une unité 19 de détection des signatures spécifiques des codes à deux dimensions, tels que les codes MAXICODE, AZTEC, QR, Code ONE, utilisant les méthodes classiques décrites dans les standards publiés par AIMI INTERNATIONAL Inc.

Le module de pré-traitement 1 comprend, enfin, un registre tampon 20 dans lequel sont mémorisées temporairement toutes les données issues des sous-modules de pré-traitement 13, 14, à savoir:

- l'image binaire issue de l'unité de binarisation 18,
- les coordonnées cartésiennes des signatures spécifiques des codes, issues de l'unité de détection 19,
- l'image pyramidale de taille T/16 codée sur 8 bits, issue de l'unité de sous-échantillonnage 15,
- l'image des contours codés sur un bit issue de l'unité de détection 16,
- et les coordonnées de début et de fin et l'orientation des segments de droite, issues de l'unité de détection 17.

L'ensemble de ces données qui s'avèrent quatre fois moins importantes que celles représentées par le stockage de l'image initiale (512 KO contre 2.25 MO) est ensuite traité de façon asynchrone vis-à-vis du flux initial par un premier module "software" 2 comprenant en premier lieu, à cet effet :

- deux blocs mémoire 21, 22 découpés chacun en trois blocs dans lesquels sont respectivement mémorisées :

  • l'image binaire,
  • l'image pyramidale et l'image des contours,
  • les données relatives aux segments de droite et aux signatures spécifiques des codes,

- un circuit logique 23 de permutation permettant d'écrire alternativement les données issues du registre tampon 20 dans l'un puis l'autre bloc mémoire 21, 22, et simultanément de lire dans l'autre bloc mémoire 22, 21.

Ce premier module "software" 2 comprend, en outre, un processeur 24 adapté pour travailler à une fréquence supérieure à la fréquence pixel, et programmé à partir des données stockées dans le bloc mémoire 21 ou 22 configuré en mode lecture par le circuit logique 23 pour:

- tester la présence ou non d'un code valide dans l'image capturée,
- localiser précisément un (ou plusieurs) code(s) valide(s),
- identifier le(s) type(s) de code(s),
- fixer, si besoin est, la priorité du code à traiter, en cas de présence de plusieurs codes,
- mettre en forme et normaliser le(s) code(s) valide(s).

Un tel module "software" 2 permet encore de réduire la quantité d'informations nécessaires au décodage et qui sont traitées de façon asynchrone dans le second module "software" 3 comprenant:

- deux blocs mémoires 25, 26,
- un circuit logique 27 de permutation de la configuration des blocs mémoires 25, 26,
- et un processeur 28 travaillant à une fréquence identique à celle du processeur 24 et programmé pour:

  - décoder les informations issues de l'étape précédente,
  - corriger d'éventuelles erreurs induites le long de la chaîne de traitement,
  - et fournir sous forme normalisée le code traduit vers une interface 29.

Le dispositif optoélectronique comprend, enfin, un circuit de synchronisation 30 relié respectivement aux unités de pilotage 6 et 8 et aux circuits logiques de permutation 23, 27 et adapté pour obtenir des configurations successives des blocs mémoires 21, 22, 25, 26 telles que représentées à la figure 3, conduisant à un traitement des images successives acquises par le capteur électronique 7 tel qu'illustré à la figure 4.

**Revendications**

1. Dispositif optoélectronique d'acquisition d'images de codes à une et deux dimensions, comprenant un capteur électronique (7), des moyens optiques (4) permettant de former des images sur ledit capteur électronique, des moyens d'éclairage (5) adaptés pour éclairer les codes et permettre l'acquisition des images sur le capteur électronique (7), et des moyens d'acquisition et de traitement des images adaptés pour piloter le capteur électronique (7) et les moyens d'éclairage (5) et pour assurer le décodage des images formées sur ledit capteur électronique, ledit dispositif optoélectronique étant caractérisé en ce que:

   - le capteur électronique (7) est constitué d'une matrice photosensible haute résolution de taille $T = n \times n$ pixels adaptée pour délivrer avec une fréquence pixel f un flot de données représentatives des images formées sur ledit capteur électronique,

   - les moyens d'acquisition et de traitement des images comprennent:

     - des moyens (10) de conversion analogique/numérique des données issues de la matrice photosensible (7), adaptés pour numériser lesdites données et délivrer un flot de données numériques codées sur un nombre prédéterminé de niveau de gris,
     - un module de pré-traitement (1) réalisé au moyen d'opérateurs câblés et adapté pour assurer un traitement bas niveau du flot de données numériques et pour fournir, d'une part, une représentation binarisée des images formées sur le capteur électronique (7) et, d'autre part, des données primitives caractéristiques des codes saisis, ledit module de pré-traitement comportant un registre tampon (20) de mémorisation temporaire des images binarisées et des données primitives,
     - un premier module programmable de traitement (2) comprenant:

       ■ deux blocs mémoires (21, 22),
       ■ un circuit logique (23) de gestion des blocs mémoires (21, 22) adapté pour configurer de façon alternative un des blocs mémoires (21) dans un mode d'écriture des données issues du registre tampon (20) et l'autre bloc mémoire (22) dans un mode de lecture des données mémorisées dans ce dernier,
       ■ et une unité programmable (24), de type processeur, programmée, à partir des données mémorisées dans le bloc mémoire (22) configuré en mode de lecture, pour tester la présence ou non d'un code valide, localiser chaque code valide, identifier chaque type de code, fixer éventuellement la priorité du code à traiter, mettre en forme et normaliser chaque code valide,

     - et un second module programmable de traitement (3) comprenant:

       ■ deux blocs mémoires (25, 26),
       ■ un circuit logique (27) de gestion des blocs mémoires (25, 26) adapté pour configurer de façon alternative un des blocs mémoires (25) dans un mode d'écriture des données issues du premier module programmable (2), et l'autre bloc mémoire (26) dans un mode de lecture des données mémorisées dans ce dernier,

■ et une unité programmable (28) de type processeur, programmée, à partir des données mémorisées dans le bloc mémoire (26) configuré en mode de lecture, pour décoder lesdites données de façon à délivrer des données normalisées représentatives de chaque code saisi.

2. Dispositif optoélectronique selon la revendication 1, caractérisé en ce que:

- la matrice photosensible (7) comporte plusieurs sorties en parallèle,
- les moyens de conversion analogique/numérique (10) sont adaptés pour numériser en parallèle les données délivrées au niveau de chaque sortie de la matrice photosensible (7), et comprennent un multiplexeur (11) adapté pour délivrer en série les données numériques.

3. Dispositif optoélectronique selon l'une des revendications 1 ou 2, caractérisé en ce que le module de pré-traitement (1) comprend:

- un bloc mémoire de lignes (12) adapté pour mémoriser les données numériques sous la forme d'une fenêtre glissante de (x) lignes consécutives comportant chacune n pixels,
- un circuit de binarisation (18) adapté pour coder les données numériques sous forme binaire en fonction d'un seuil évolutif calculé, pour chaque donnée traitée, en prenant en compte le voisinage des (x, x) données entourant ladite donnée.

4. Dispositif optoélectronique selon la revendication 3, caractérisé en ce que le module de pré-traitement (1) comporte un circuit de détection (19) adapté pour identifier, à partir des données binaires issues du circuit de binarisation (18), des signatures spécifiques de codes à deux dimensions tels que notamment les codes MAXICOME, AZTEC, QR, Code ONE.

5. Dispositif optoélectronique selon la revendication 4, caractérisé en ce que le module de pré-traitement (1) comprend, en aval du bloc mémoire de lignes (12), deux sous-modules de pré-traitement (13, 14) disposés en parallèle entre ledit bloc mémoire et le registre tampon (20):

- un premier sous-module de traitement (14) comportant le circuit de binarisation (18) et le circuit de détection de signatures (19), et adapté pour délivrer vers le registre tampon (20) une image binaire, et les coordonnées cartésiennes des signatures spécifiques des codes,

- un second sous-module de traitement (13) comportant successivement:

• un circuit de sous-échantillonnage (15) apte à réduire la taille T de l'image formée sur la matrice photosensible (7), et adapté pour délivrer ladite image réduite vers le registre tampon (20),
• un circuit (16) de détection des contours dans l'image réduite issue du circuit de sous-échantillonnage (15), adapté pour délivrer vers le registre tampon (20) des images desdits contours codés sur un bit,
• et un circuit (17) de détection des segments de droites dans l'image réduite adapté pour délivrer vers le registre tampon (20) les coordonnées de fin et de début et l'orientation desdits segments de droite.

6. Dispositif optoélectronique selon la revendication 5, caractérisé en ce que chaque bloc mémoire (21, 22) du premier module programmable (2) comprend trois blocs dans lesquels sont respectivement mémorisées:

• l'image binaire,
• l'image réduite et l'image des contours,
• les données relatives aux segments de droite et aux signatures spécifiques des codes.

Fig 1

## Fig 2

**Fig 2**

| t − 1 | t | t + 1 |
|---|---|---|
| Module (1) → MEM (21) | Module (1) → MEM (22) | Module (1) → MEM (21) |
| MEM(22) → CPU (24) → MEM (25) | MEM (21) → CPU (24) → MEM (26) | MEM(22) → CPU (24) → MEM (25) |
| MEM (26) → CPU (28) | MEM (25) → CPU (28) | MEM (26) → CPU (28) |

**Fig 3**

| | | | |
|---|---|---|---|
| Capteur | I(t−1) | I(t) | I(t+1) |
| CAN | I(t−1) | I(t) | I(t+1) |
| CPU1 | I(t−2) | I(t−1) | I(t) |
| CPU2 | I(t−3) | I(t−2) | I(t−1) |

**Fig 4**

**Office européen des brevets**

**RAPPORT DE RECHERCHE EUROPEENNE**

Numéro de la demande

EP 00 39 0001

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | US 5 654 533 A (SUZUKI MASASHI ET AL) 5 août 1997 (1997-08-05) | 1 | G06K7/10 |
| A | * colonne 5, ligne 14 - colonne 9, ligne 8 * <br> * figures 7,8,10 * | 6 | |
| Y | US 5 144 118 A (ACTIS ROBERT J ET AL) 1 septembre 1992 (1992-09-01) <br> * abrégé * <br> * colonne 3, ligne 14 - colonne 5, ligne 49 * <br> * figure 1 * | 1 | |
| A | WO 98 16896 A (CHANDLER DONALD G ;OMNIPLANAR INC (US); BATTERMAN ERIC P (US)) 23 avril 1998 (1998-04-23) <br> * page 2, alinéas 2,3 * <br> * page 6, alinéas 1-3 * | 4 | |

**DOMAINES TECHNIQUES RECHERCHES (Int.Cl.7)**

G06K

Le présent rapport a été établi pour toutes les revendications

| Lieu de la recherche | Date d'achèvement de la recherche | Examinateur |
|---|---|---|
| LA HAYE | 20 mars 2000 | Jacobs, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 39 0001

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-03-2000

| Document brevet cité au rapport de recherche | Date de publication | Membre(s) de la famille de brevet(s) | Date de publication |
|---|---|---|---|
| US 5654533 A | 05-08-1997 | JP 6139398 A<br>JP 6139399 A | 20-05-1994<br>20-05-1994 |
| US 5144118 A | 01-09-1992 | US 5247161 A | 21-09-1993 |
| WO 9816896 A | 23-04-1998 | AUCUN | |

EPO FORM P0460

Pour tout renseignement concernant cette annexe : voir Journal Officiel de l'Office européen des brevets, No.12/82